# EUROPÄISCHE PATENTSCHRIFT

(11) **EP 1 983 817 B1**
(45) Veröffentlichungstag und Bekanntmachung des Hinweises auf die Patenterteilung: **04.11.2009**
(21) Anmeldenummer: 07704409.7
(22) Anmeldetag: 07.02.2007
(51) Int. Cl.: A01B 71/04

(54) **ROTIERENDES LANDWIRTSCHAFTLICHES WERKZEUG MIT LAGERANORDNUNG**
ROTATING AGRICULTURAL TOOL WITH BEARING ARRANGEMENT
OUTIL AGRICOLE ROTATIF AVEC AGENCEMENT DE PALIER

(30) Priorität: 18.02.2006 DE 102006007580
(43) Veröffentlichungstag der Anmeldung: 29.10.2008
(73) Patentinhaber: Schaeffler KG, 91074 Herzogenaurach (DE)
(72) Erfinder: SPOHN, Markus, 91097 Oberreichenbach (DE); LUNZ, Erich, 91475 Lonnerstadt (DE); KRUEGER, Jens, 90427 Nürnberg (DE); HOFFINGER, Christian, 91166 Georgensgmünd (DE)
(86) Internationale Anmeldenummer: PCT/EP2007/051151
(87) Internationale Veröffentlichungsnummer: WO 2007/093534

(56) Entgegenhaltungen:
- DE-C- 933 360
- FR-A1- 2 788 725
- GB-A- 2 035 026
- US-A- 2 691 557

## Beschreibung

### Anwendungsgebiet der Erfindung

Die Erfindung betrifft ein rotierendes, scheibenförmiges, landwirtschaftliches Werkzeug, dass in einem Rahmen einer Maschine über eine Nabe und eine Lageranordnung gehalten ist, wobei die Lageranordnung wenigstens einen Innenring und wenigstens einen Außenring sowie eine Anzahl von Wälzkörpern aufweist, die zwischen Innen- und Außenring angeordnet sind.

### Hintergrund der Erfindung

Beispiele für derartige landwirtschaftliche Werkzeuge sind Pflugmesserscheiben in Pflügen, Schneidscheiben für Sämaschinen und Scheiben für Eggen. In derartigen Anordnungen ist die rotierende Scheibe in einer Lageranordnung geführt, die häufig von einem kurzen Lagerzapfen aufgenommen ist, wobei der Lagerzapfen an einem Maschinenrahmen befestigt ist. Die Lageranordnung ist im Rahmen in einem bestimmten Abstand über der Erde befestigt, so dass die Schneide der Scheibe eine Furche in die Erde schneiden kann, wenn die landwirtschaftliche Maschine über die Erde gezogen oder auf ihr entlang gefahren wird. Während dieses Vorganges ist die Scheibe einer veränderlichen Belastung ausgesetzt, was es erforderlich macht, die Scheibe in einer geeigneten Lagerung anzuordnen, die allen Ansprüchen genügt. Die Lageranordnung hat in solchen Anwendungen eine hohe Bedeutung, wenn das landwirtschaftliche Werkzeug im Gebrauch in die Erde einschneidet und dabei Erde, Gesteinsbrocken und Schlamm gegen die Lageranordnung schleudert, weshalb diese sehr gut gegen die Umgebung abgedichtet sein muss.

Ein derart gattungsgemäß ausgebildetes landwirtschaftliches Werkzeug ist aus der DE 828 168 vorbekannt. Wie aus der einzigen Figur und der zugehörigen Beschreibung entnehmbar, ist ein Achsbolzen von einem Trägerelement der landwirtschaftlichen Maschine aufgenommen. Der Achsbolzen trägt wiederum ein als Kugellager ausgestaltetes Wälzlager, dessen Lageraußenring von einem Nabenkörper umschlossen ist, der wiederum mit dem landwirtschaftlichen Werkzeug verbunden ist. Dabei ist von Nachteil, dass ein solcher Nabenkörper als Massivteil sehr aufwendig zu fertigen ist. Außerdem ist das einreihig ausgebildete Kugellager in der Aufnahme von axialen Kräften und Momenten begrenzt.

Weitere gattungsgemäße Lageranordnungen für landwirtschaftliche Werkzeuge sind aus der US 2,768,864 und aus der DE 79 00 576 U1 vorbekannt. In beiden Fällen ist eine Lageranordnung gezeigt, bei der in einem Rahmen einer landwirtschaftlichen Maschine ein Achsstummel befestigt ist, der wiederum zwei voneinander in axialer Richtung beabstandete Kugellager trägt, die in beiden Fällen von einem als separates Bauteil ausgebildeten Nabenkörper umschlossen sind, der wiederum mit dem landwirtschaftlichen Werkzeug verbunden ist. Auch hier treffen die vorstehend aufgeführten Nachteile zu.

Auch aus der DE 200 12 666 U1 ist eine weitere gattungsgemäße Lageranordnung für ein rotierendes landwirtschaftliches Werkzeug bekannt. Verwendet ist ein aus dem PKW-Bereich bekanntes Radlager, das über einen Achsstummel mit einem Rahmen der landwirtschaftlichen Maschine verbunden ist. Dessen Innen- oder Außenring ist mit einem radial nach außen gerichteten Flansch versehen, der Befestigungsbohrungen aufweist, die gleichmäßig über den Umfang von einander beabstandet sind und zur Aufnahme von Schrauben dienen, die das landwirtschaftliche Werkzeug mit einem der Lagerringe lösbar verbinden. Nachteilig dabei ist, dass eine solche als zweireihiges Schrägkugellager ausgebildete Lageranordnung sehr massiv ausgebildet ist und auch in der Aufnahme von axialen Kräften eingeschränkt ist.

Weitere Lagerungen für landwirtschaftliche Werkzeuge, die mit der erfindungsgemäßen Lösung zumindest in einem mittelbaren Zusammengang stehen, sind in nachstehend ausgeführten Vorveröffentlichungen beschrieben:
DE 933 360, DE 29 13 064 A1, DE 41 38 847 A1, DE 39 16 269 A1, DE 44 20 486 A1, US 1,506,782, US 2,566,991, US 3,101,793, US 4,136,746, US 4,196,779, US 4,590,869 und US 2 691 557.

### Zusammenfassung der Erfindung

Ausgehend von den Nachteilen des bekannten Standes der Technik liegt der Erfindung daher die Aufgabe zugrunde, eine Lageranordnung für ein rotierendes landwirtschaftliches Werkzeug mit hoher Leistungsfähigkeit bereitzustellen, die einfach herzustellen ist, eine vereinfachte Montagemöglichkeit bietet und mit eingestellter Vorspannung lieferbar ist. Außerdem soll das Lager gut gegen äußere Einflüsse geschützt sein.

Die Lösung dieser Aufgabe ist durch die Merkmale des Hauptanspruches bestimmt, wobei die Unteransprüche vorteilhafte Weiterbildungen beinhalten.

Die erfindungsgemäße Lageranordnung zeichnet sich dadurch aus, dass durch den Einsatz der Schrägrollenlager ein Linienkontakt zwischen Wälzkörpern und Umgebungsbauteilen realisiert ist, so dass eine hohe Tragfähigkeit gegeben ist. Diese wirkt sich insbesondere vorteilhaft bei auftretenden Stoßbelastungen aus. Ein weiterer Vorteil besteht darin, dass durch die Schrägrollenlager sowohl Radialkräfte als auch Axialkräfte sicher aufgenommen werden können. Es ist auch von Vorteil, dass durch die Verwendung der spanlos hergestellten und gehärteten Laufscheiben die Umgebungskonstruktion relativ weich bleiben kann, d.h., nicht gehärtet zu werden braucht. Ein weiterer Vorteil ist darin begründet, dass durch den verschiebbaren Stellring die gewünschte Lagervorspannung in einfacher Weise einstellbar ist. Ein weiterer Vorteil ist die zuverlässige Abdichtung der Lageranordnung. Die zwischen Nabenkörper und Stützring vorzugsweise angeordneten Kassettendichtungen sorgen für eine hohe Dichtwirkung. Hinzukommt, dass diese hohe Dichtwirkung noch durch vorgeschaltete Spaltdichtungen verbessert ist, welche durch beidseitig am Stützring angeordnete Abdeckscheiben realisiert sind. Es ist auch von Vorteil, dass durch die einstückige Ausbildung von Nabenkörper und radial ausgerichtetem Flansch eine unkomplizierte Verbindung mit dem landwirtschaftlichen Werkzeug gegeben ist. Schließlich kommt als weiterer Vorteil hinzu, dass die erfindungsgemäße Lageranordnung als unverlierbares Bauteil ausgebildet ist, die bereits die vom späteren Anwender vorgegebene Vorspannung aufweist, so dass dieser lediglich die Lageranordnung mit dem Rahmen seiner landwirtschaftlichen Maschine und mit dem landwirtschaftlichen Werkzeug in unkomplizierter Weise mittels schraubbarer Befestigungselemente oder auf andere Art und Weise zu verbinden braucht.

Die Erfindung wird an nachstehenden Ausführungsbeispielen näher beschrieben.

### Kurze Beschreibung der Zeichnungen

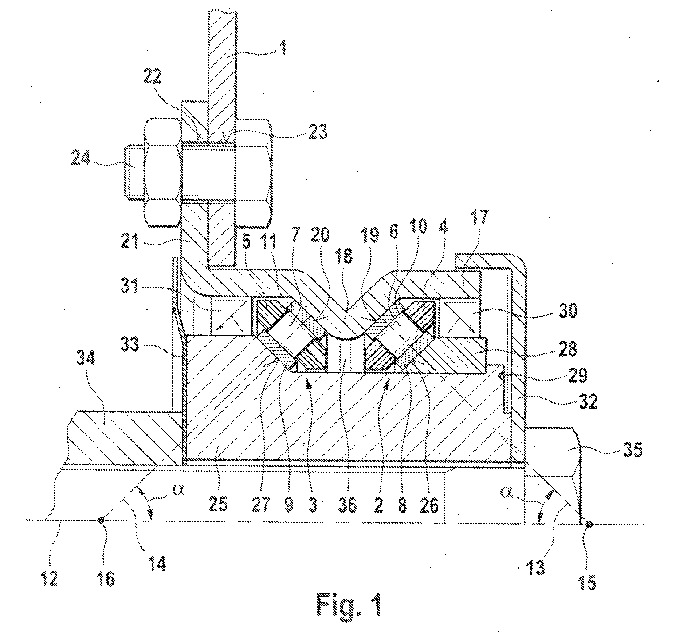

Die Figuren 1 bis 5 zeigen schematisch einen Längsschnitt durch ein scheibenförmiges Werkzeug mit erfindungsgemäßer Lageranordnung in unterschiedlichen Ausführungsvarianten.

### Ausführliche Beschreibung der Zeichnungen

Das rotierende landwirtschaftliche Werkzeug 1 in Form einer Scheibe nach Figur 1 hat in nicht dargestellter Weise an ihrem Außenumfang eine Schneide, mit der sie bei Rotation in die Erde eindringen kann. Wie erkennbar, ist die Scheibe 1 über zwei voneinander beabstandete Schrägrollenlager 2, 3 gehalten, deren in einem Käfig 4, 5 geführte Lagernadeln 6, 7 auf nicht näher bezeichneten Laufbahnen abrollen, die von einer inneren Laufscheibe 8, 9 und von einer äußeren Laufscheibe 10, 11 gebildet sind. Der im Wesentlichen V-förmig ausgestaltete Raum 36 zur Aufnahme der Schrägrollenlager 2, 3 ist einerseits in radialer Richtung nach außen von einem Nabenkörper 17 und andererseits in radialer Richtung nach innen von einem Stützring 25 begrenzt. Die Laufbahnen sind unter dem Winkel α geneigt zur Lagerachse 12 angeordnet, wobei sich der Neigungswinkel α je nach Anwendungsfall in einem Bereich zwischen 45 und 65° bewegen kann. Die Schrägrollenlager 2, 3 sind zueinander in O-Anordnung angestellt, d.h., die Drucklinien 13, 14 der Wälzkörper 6, 7 verlaufen in Richtung der Lagerachse 12 schräg von innen nach außen und schneiden sich mit dieser in den Punkten 15, 16.

Wie bereits erwähnt, sind beide Schrägrollenlager 2, 3 in radialer Richtung nach außen von einem die Nabe bildenden Nabenkörper 17 aufgenommen, der in seinem Mittelteil eine V-förmige Ausbildung 18 aufweist, die beidseitig die geneigten Anlageflächen 19, 20 für die Schrägrollenlager 2, 3 stellt. An seinem linkseitigen Ende geht der Nabenkörper 17 in ein Befestigungselement in Form eines radial nach außen gerichteten Flansches 21 über, der mit Durchtrittsbohrungen 22 versehen ist. Die Scheibe 1 weist ebenfalls Durchtrittsbohrungen 23 auf, so dass diese in einfacher Weise mittels Befestigungsschrauben 24 mit dem Nabenkörper 17 über dessen Flansch 21 verbindbar ist. Aber auch andere Befestigungsarten der Scheibe 1 am Flansch 21, wie ein Verschweißen oder Vernieten sind denkbar.

In radialer Richtung nach innen sind die Schrägrollenlager 2, 3 von einem Stützring 25 aufgenommen, der linkseitig die geneigte Anlagefläche 27 aufweist, während die rechtsseitig angeordnete, ebenfalls geneigte Anlagefläche 26 von einem Stellring 28 gebildet ist, der auf dem Stützring 25 axial verschiebbar und festlegbar angeordnet ist. Die Einstellung der gewünschten Lagervorspannung erfolgt derart, dass der Stellring 28 in die richtige axiale Position auf dem Stützring 25 gebracht und auf diesem fixiert wird. Im Ausführungsbeispiel erfolgt dessen Festlegung mit Hilfe einer Verstemmung 29. Aber auch ein Verschweißen, Bördeln oder Vernieten sind zur Festlegung des Stellringes 28 auf dem Stützring 25 in Betracht zu ziehen.

Wie Figur 1 weiter zeigt, ist die Lageranordnung nach außen effizient abgedichtet, was bei landwirtschaftlichen Werkzeugen aufgrund von deren Einsatzbedingungen von großer Bedeutung ist. Zwischen Nabenkörper 17 einerseits und Stützring 25 sowie Stellring 28 andererseits sind beidseitig Dichtelemente 30, 31 angeordnet, die den die Schrägrollenlager 2, 3 aufnehmenden Raum zuverlässig abdichten. Im Sinne der Erfindung sind sämtliche Dichtungsarten vorstellbar. Ganz besonders eignen sich aufgrund ihrer sehr guten Dichtwirkung so genannte Kassettendichtungen. Es ist an dieser Stelle nicht erforderlich, diese in ausführlicher Weise zu erläutern, da sie in vielfachen Vorveröffentlichungen ausführlich beschrieben sind. Derartige Kassettendichtungen sind beispielhaft in der DE 38 06 928 A1, DE 38 22 816 A1, DE 39 40 003 A1, DE 196 14 946 A1 und in der DE 200 05 585 U1 vorbeschrieben.

Den Dichtelementen 30, 31 sind beidseitig zusätzlich noch zwei Spaltdichtungen vorgeschaltet. Diese werden von je einer Abdeckscheibe 32, 33 gebildet, die an der Stirnseite des Stützringes 25 rechts- und linksseitig angeordnet sind. Die Spaltdichtung wird mit dem Nabenkörper 17 und dessen Flansch 21 gebildet. Zusätzlich zur verbesserten Dichtwirkung haben die beiden Spaltdichtungen die zusätzliche Wirkung, dass sich auf dem Nabenkörper 17 und auf dessen Flansch 21 festsetzende Erdmassen durch die stillstehenden Abdeckscheiben 32, 33 bei Rotation der Scheibe 1 abgeschert werden. Um dabei durch die Erdmassen und Steine nicht mechanisch beschädigt zu werden, ist es erforderlich, dass die Abdeckscheiben 32, 33 eine ausreichende mechanische Festigkeit aufweisen.

Wie aus Figur 1 weiter erkennbar, ist die aus Stützring 25, Stellring 28, Schrägrollenlager 2, 3, Nabenkörper 17, Abdeckscheiben 32, 33 und Dichtelementen 30, 31 bestehende gesamte Lagerbaueinheit am Rahmen 34 einer landwirtschaftlichen Maschine derart befestigt, indem eine Befestigungsschraube 35 die Lageranordnung durchdringt und im Rahmen 34 eingeschraubt ist.

Die Montage der Gesamtlageranordnung erfolgt derart, dass zunächst auf den Stützring 25 das linkseitig angeordnete Schrägrollenlager 3 aufgeschoben wird. Danach wird ebenfalls von der linken Seite kommend der Nabenkörper 17 aufgeschoben, bevor das rechtsseitig angeordnete Schrägrollenlager 2 aufgesteckt wird. Anschließend wird der Stellring 28 auf den Stützring 25 aufgeschoben und in der Stellung festgelegt, die der gewünschten Lagervorspannung entspricht. Die Montage der Lageranordnung wird nun mit dem Einsetzen der beiden Dichtelemente 30, 31 zwischen Nabenkörper 17 und dem Stützring 25 bzw. dem Stellring 28 fortgesetzt. Schließlich werden mit Hilfe der Befestigungsschraube 35 rechts- und linksseitig die beiden Abdeckscheiben 32, 33 angeordnet, wobei der Zusammenhalt der Lagerung mit Hilfe eines nicht dargestellten Sicherungselementes auf der Befestigungsschraube 35 realisiert ist. Auf diese Weise ist eine unverlierbare Lagerbaueinheit gebildet, die ohne in ihre Einzelbestandteile zu zerfallen an den Endkunden geliefert werden kann. Dieser braucht lediglich in einfacher Weise sein landwirtschaftliches Werkzeug 1 zu befestigen und die gesamte Anordnung mit Hilfe der Befestigungsschraube 35 im Rahmen 34 seiner landwirtschaftlichen Maschine zu fixieren. Die Art der Befestigung der Lagerbaueinheit am Rahmen 34 der landwirtschaftlichen Maschine ist dabei von untergeordneter Bedeutung. So ist es beispielsweise denkbar, dass der Stützring 25 mit einem Gewindebolzen versehen ist und über diesen in den Rahmen 34 einschraubbar ist. Auch eine unlösbare Schweißverbindung kann unter bestimmten Bedingungen von Vorteil sein.

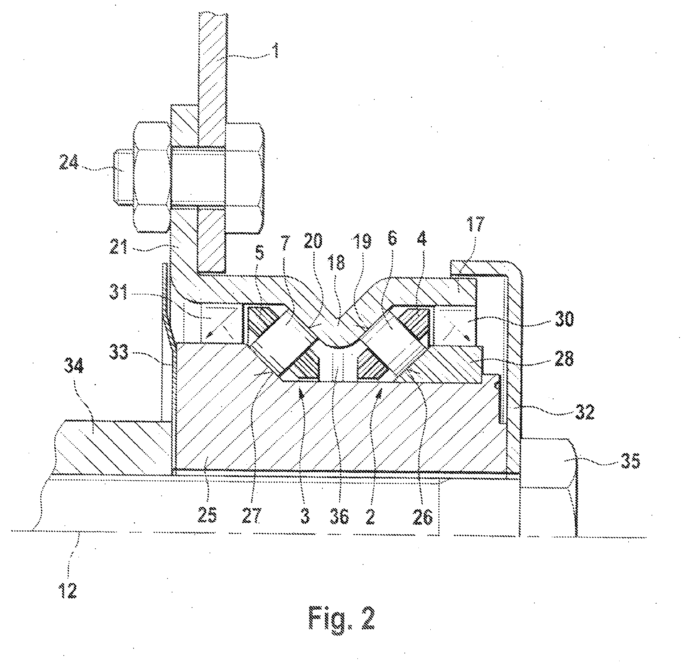

Die in Figur 2 dargestellte Lageranordnung zur drehbaren Lagerung eines landwirtschaftlichen Werkzeuges unterscheidet sich von der in Figur 1 lediglich dadurch, dass keine inneren und äußeren Laufscheiben 8, 9, 10,11 vorhanden sind. Die inneren Laufbahnen für die im Käfig 4, 5 geführten Wälzkörper 6, 7 werden in diesem Fall von den Anlageflächen 26, 27 des Stellringes 28 und Stützringes 25 gebildet, während die äußeren Laufbahnen von den Anlageflächen 19, 20 des Nabenkörpers 17 gestellt sind. Dies setzt voraus, dass sie einer entsprechenden Wärmebehandlung zur Härtesteigerung zu unterwerfen sind.

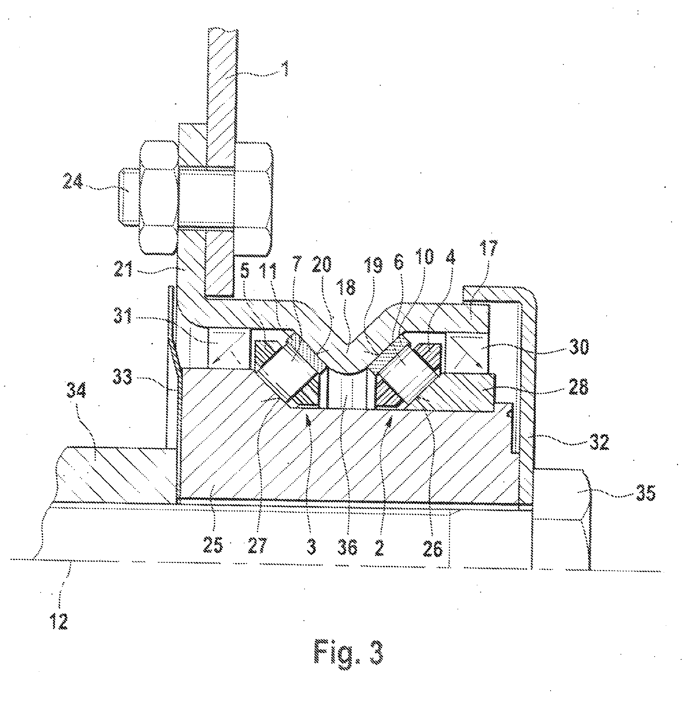

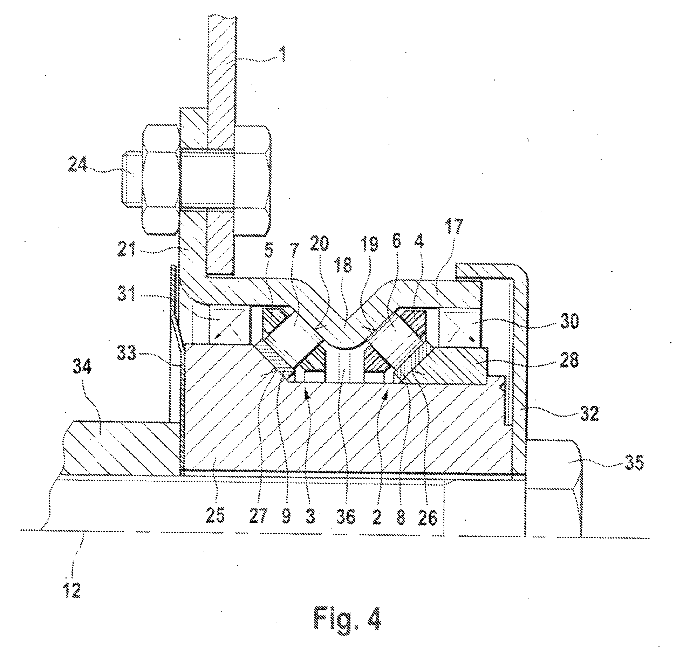

Die in den Figuren 3 und 4 dargestellten Lageranordnungen unterscheiden sich dadurch, dass im ersten Fall nur äußere Laufscheiben 10, 11 und im zweiten Fall nur innere Laufscheiben 8,9 vorhanden sind. Naturgemäß werden daher die inneren Laufbahnen im ersten Fall und die äußeren Laufbahnen im zweiten Fall für die im Käfig 4, 5 geführten Wälzkörper 6, 7 von den Anlageflächen 26, 27 des Stellringes und des Stützringes 25 sowie von den Anlageflächen 19, 20 des Nabenkörpers 17 gestellt.

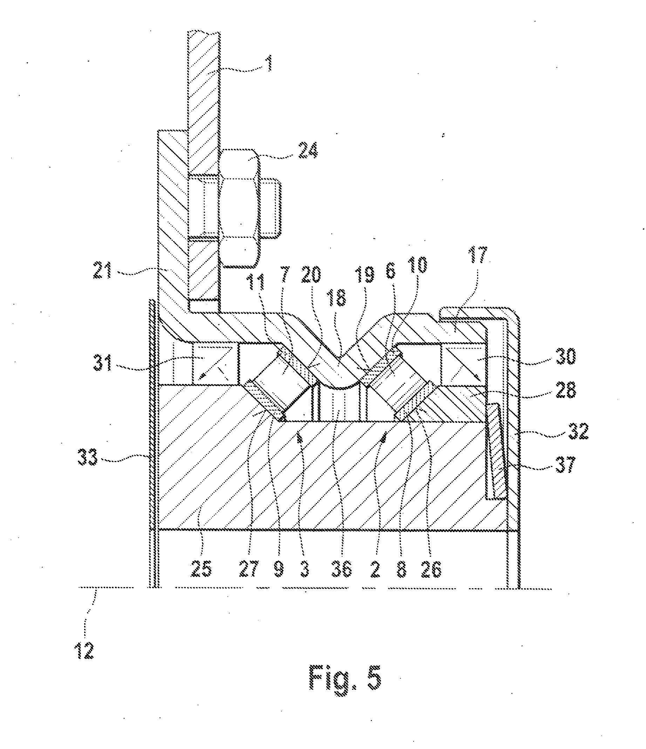

Schließlich ist in Figur 5 eine weitere erfindungsgemäße Lageranordnung gezeigt, die sich von der in Figur 1 dargestellten lediglich durch die Fixierung des Stellringes 28 auf dem Stützring 25 unterscheidet. Wie erkennbar, ist der Stellring 28 durch ein Federelement 37 mit einer in axialer Richtung wirkenden Kraft beaufschlagt, wobei sich das Federelement an der Abdeckscheibe 32 abstützt.

### Bezugszahlenliste

- 1: landwirtschaftliches Werkzeug
- 2: Schrägrollenlager
- 3: Schrägrollenlager
- 4: Käfig
- 5: Käfig
- 6: Lagernadel
- 7: Lagernadel
- 8: innere Laufscheibe
- 9: innere Laufscheibe
- 10: äußere Laufscheibe
- 11: äußere Laufscheibe
- 12: Lagerachse
- 13: Drucklinie
- 14: Drucklinie
- 15: Punkt
- 16: Punkt
- 17: Nabenkörper
- 18: V-förmige Ausbildung
- 19: Anlagefläche
- 20: Anlagefläche
- 21: Flansch
- 22: Durchtrittsbohrung
- 23: Durchtrittsbohrung
- 24: Befestigungselement
- 25: Stützring
- 26: Anlagefläche
- 27: Anlagefläche
- 28: Stellring
- 29: Verstemmung
- 30: Dichtelement
- 31: Dichtelement
- 32: Abdeckscheibe
- 33: Abdeckscheibe
- 34: Rahmen
- 35: Befestigungsschraube
- 36: Raum
- 37: Federelement
- α: Neigungswinkel

## Patentansprüche

1. Rotierendes, scheibenförmiges, landwirtschaftliches Werkzeug (1), das in einem Rahmen (34) einer Maschine über eine Nabe und eine Lageranordnung gelagert ist, wobei die Lageranordnung wenigstens einen Innenring und wenigstens einen Außenring sowie eine Anzahl von Wälzkörpern aufweist, die zwischen Innen- und Außenring angeordnet sind, **dadurch gekennzeichnet, dass** die Lageranordnung aus zwei gegeneinander in O-Anordnung angestellten Schrägrollenlagern (2, 3) gebildet ist; deren Laufbahnen unter einem Winkel (α) geneigt zu einer Lagerachse (12) angeordnet sind, wobei ein die Schrägrollenlager (2, 3) aufnehmender Raum (36) in radialer Richtung nach außen von einem in seinem Mittelteil V-förmig ausgebildeten Nabenkörper (17) mit Anlageflächen (19, 20) und in radialer Richtung nach innen von einem Stützring (25) mit beidseitig in axialer Richtung von einander beabstandeten Anlageflächen (26, 27) begrenzt ist, wobei der Nabenkörper (17) an einem axialen Ende mit einem Befestigungselement zur Befestigung des Werkzeuges (1) versehen ist.

2. Landwirtschaftliches Werkzeug (1) nach Anspruch 1, **dadurch gekennzeichnet, dass** die Laufbahnen der Schrägrollenlager (2, 3) durch eine innere und/oder eine äußere Laufscheibe (8, 9, 10, 11) gebildet sind.

3. Landwirtschaftliches Werkzeug (1) nach Anspruch 1, **dadurch gekennzeichnet, dass** das Befestigungselement ein radial nach außen sich erstreckender Flansch (21) ist, der mit mehreren in Umfangsrichtung voneinander beabstandeten Aufnahmebohrungen (22) versehen ist.

4. Landwirtschaftliches Werkzeug (1) nach Anspruch 1, **dadurch gekennzeichnet, dass** der Nabenkörper (17) und der radial sich erstreckender Flansch (21) einstückig ausgebildet und durch einen spanlosen Formgebungsvorgang hergestellt sind.

5. Landwirtschaftliches Werkzeug (1) nach Anspruch 2, **dadurch gekennzeichnet, dass** die inneren Laufscheiben (8, 9) der Schrägrollenlager (2, 3) vom Stützring (25) aufgenommen sind.

6. Landwirtschaftliches Werkzeug (1) nach Anspruch 2, **dadurch gekennzeichnet, dass** die Laufscheiben (8, 9, 10, 11) spanlos hergestellt und einem Härteprozeß unterworfen sind.

7. Landwirtschaftliches Werkzeug (1) nach Anspruch 1, **dadurch gekennzeichnet, dass** eine der Anlageflächen (26) von einem Stellring (28) gebildet ist, der auf dem Stützring (25) axial verschiebbar und festlegbar angeordnet ist.

8. Landwirtschaftliches Werkzeug (1) nach Anspruch 1, **dadurch gekennzeichnet, dass** beidseitig zwischen dem Nabenkörper (17) und dem Stützring (25) Dichtelemente (30, 31) angeordnet sind.

9. Landwirtschaftliches Werkzeug (1) nach Anspruch 8, **dadurch gekennzeichnet, dass** die Dichtelemente (30, 31) als Kasettendichtungen ausgebildet sind.

10. Landwirtschaftliches Werkzeug (1) nach Anspruch 1, **dadurch gekennzeichnet, dass** beidseitig vom Stützring (25) je eine Abdeckscheibe (32, 33) angeordnet ist, die mit dem Nabenkörper (17) je eine Spaltdichtung bilden.

11. Landwirtschaftliches Werkzeug (1) nach Anspruch 1, **dadurch gekennzeichnet, dass** die Wälzkörper als in einem Käfig (4, 5) geführte Lagernadeln (6, 7) ausgebildet sind, die unter einem Neigungswinkel (α) von 45° bis 65° gegenüber der Lagerachse (12) abrollen.

12. Landwirtschaftliches Werkzeug (1) nach Anspruch 1, **dadurch gekennzeichnet, dass** die Lageranordnung mit einer sie durchsetzenden Befestigungsschraube (35) lösbar mit dem Rahmen (34) verbunden ist.

## Claims

1. Rotating, disc-shaped, agricultural tool (1) which is mounted in a frame (34) of a machine via a hub and a bearing arrangement, the bearing arrangement having at least one inner ring and at least one outer ring and also a number of rolling bodies arranged between the inner ring and outer ring, **characterized in that** the bearing arrangement is formed from two angular roller bearings (2, 3) which are set in back-to-back arrangement and the running paths of which are arranged inclined at an angle (α) to a bearing axis (12), a space (36) accommodating the angular roller bearings (2, 3) being defined outwardly in the radial direction by a hub body (17), of V-shaped design in its center part and having contact surfaces (19, 20), and inwardly in the radial direction by a supporting ring (25) having contact surfaces (26, 27) which are set apart from one another on both sides in the axial direction, the hub body (17) being provided at an axial end with a fastening element for fastening the tool (1).

2. Agricultural tool (1) according to Claim 1, **characterized in that** the running paths of the angular roller bearings (2, 3) are formed by an inner and/or an outer running disc (8, 9, 10, 11).

3. Agricultural tool (1) according to Claim 1, **characterized in that** the fastening element is a flange (21) which extends radially outward and is provided with a plurality of receiving holes (22) which are set apart from one another in the circumferential direction.

4. Agricultural tool (1) according to Claim 1, **characterized in that** the hub body (17) and the radially extending flange (21) are formed in one piece and manufactured by a non-cutting shaping process.

5. Agricultural tool (1) according to Claim 2, **characterized in that** the inner running discs (8, 9) of the angular roller bearings (2, 3) are received by the supporting ring (25).

6. Agricultural tool (1) according to Claim 2, **characterized in that** the running discs (8, 9, 10, 11) are manufactured without cutting and subjected to a hardening process.

7. Agricultural tool (1) according to Claim 1, **characterized in that** one of the contact surfaces (26) is formed by an adjusting ring (28) which is arranged on the supporting ring (25) such that it can be moved and secured axially.

8. Agricultural tool (1) according to Claim 1, **characterized in that** sealing elements (30, 31) are arranged on both sides between the hub body (17) and the supporting ring (25).

9. Agricultural tool (1) according to Claim 8, **characterized in that** the sealing elements (30, 31) are designed as cassette seals.

10. Agricultural tool (1) according to Claim 1, **characterized in that** covering discs (32, 33), which each form with the hub body (17) a gap seal, are arranged one on each side of the supporting ring (25).

11. Agricultural tool (1) according to Claim 1, **characterized in that** the rolling bodies are designed as bearing needles (6, 7) which are guided in a cage (4, 5) and roll off at an angle of inclination (α) of from 45° to 65° relative to the bearing axis (12).

12. Agricultural tool (1) according to Claim 1, **characterized in that** the bearing arrangement is detachably connected to the frame (34) by a fastening screw (35) penetrating said bearing arrangement.

## Revendications

1. Outil agricole rotatif en forme de disque (1), qui est monté dans un cadre (34) d'une machine par le biais d'un moyeu et d'un agencement de palier, l'agencement de palier présentant au moins une bague interne et au moins une bague externe ainsi qu'un certain nombre de corps de roulement, qui sont disposés entre la bague interne et la bague externe, **caractérisé en ce que** l'agencement de palier est formé de deux paliers à rouleaux obliques (2, 3) inclinés l'un par rapport à l'autre suivant un agencement en O, dont les pistes de roulement sont disposées de manière inclinées d'un angle (α) par rapport à un axe de palier (12), un espace (36) recevant les paliers à rouleaux obliques (2, 3) étant limité dans la direction radiale vers l'extérieur par un corps de moyeu (17) réalisé en forme de V dans sa partie centrale, avec des surfaces d'appui (19, 20), et dans la direction radiale vers l'intérieur par une bague de support (25), avec des surfaces d'appui (26, 27) espacées l'une de l'autre de chaque côté dans la direction axiale, le corps de moyeu (17) étant pourvu à une extrémité axiale d'un élément de fixation pour la fixation de l'outil (1).

2. Outil agricole (1) selon la revendication 1, **caractérisé en ce que** les pistes de roulement des paliers à rouleaux obliques (2, 3) sont formées par un disque de roulement interne et/ou externe (8, 9, 10, 11).

3. Outil agricole (1) selon la revendication 1, **caractérisé en ce que** l'élément de fixation est une bride (21) s'étendant radialement vers l'extérieur, qui est pourvue de plusieurs alésages de réception (22) espacés les uns des autres dans la direction périphérique.

4. Outil agricole (1) selon la revendication 1, **caractérisé en ce que** le corps de moyeu (17) et la bride (21) s'étendant radialement sont réalisés d'une seule pièce et sont fabriqués par une opération de façonnage sans enlèvement de copeaux.

5. Outil agricole (1) selon la revendication 2, **caractérisé en ce que** les disques de roulement internes (8, 9) des paliers à rouleaux obliques (2, 3) sont reçus par la bague de support (25).

6. Outil agricole (1) selon la revendication 2, **caractérisé en ce que** les disques de roulement (8, 9, 10, 11) sont fabriqués sans enlèvement de copeaux et sont soumis à un processus de durcissement.

7. Outil agricole (1) selon la revendication 1, **caractérisé en ce que** l'une des surfaces d'appui (26) est formée par une bague de réglage (28) qui est disposée de manière déplaçable axialement et fixable sur la bague de support (25).

8. Outil agricole (1) selon la revendication 1, **caractérisé en ce que** des éléments d'étanchéité (30, 31) sont disposés de chaque côté entre le corps de moyeu (17) et la bague de support (25).

9. Outil agricole (1) selon la revendication 8, **caractérisé en ce que** les éléments d'étanchéité (30, 31) sont réalisés sous forme de joints d'étanchéité à cassette.

10. Outil agricole (1) selon la revendication 1, **caractérisé en ce que** de chaque côté de la bague de support (25) est disposé un disque de recouvrement respectif (32, 33), qui forme avec le corps de moyeu (17) un joint d'étanchéité à fente respectif.

11. Outil agricole (1) selon la revendication 1, **caractérisé en ce que** les corps de roulement sont réalisés sous forme d'aiguilles de palier (6, 7) guidés dans une cage (4, 5), qui roulent suivant un angle d'inclinaison (α) de 45° à 65° par rapport à l'axe de palier (12).

12. Outil agricole (1) selon la revendication 1, **caractérisé en ce que** l'agencement de palier est connecté de manière desserrable au cadre (34) avec une vis de fixation (35) qui le traverse.
